# EUROPEAN PATENT SPECIFICATION

(11) **EP 3 835 359 B1**
(45) Date of publication and mention of the grant of the patent: **07.08.2024**
(21) Application number: 19848279.6
(22) Date of filing: 07.08.2019
(51) Int. Cl.: C08L 67/02, C08K 7/14, C08L 23/08, C08L 63/04, C08L 83/04

(54) **THERMOPLASTIC POLYESTER RESIN COMPOSITION AND MOLDED ARTICLE THEREOF**
THERMOPLASTISCHE POLYESTERHARZZUSAMMENSETZUNG UND FORMARTIKEL DARAUS
COMPOSITION DE RÉSINE DE POLYESTER THERMOPLASTIQUE ET ARTICLE MOULÉ ASSOCIÉ

(30) Priority: 09.08.2018 JP 2018150083
(43) Date of publication of application: 16.06.2021
(73) Proprietor: Toray Industries, Inc., Tokyo 103-8666 (JP)
(72) Inventor: YAMAKAWA, Takayuki, Tokyo 103-8666 (JP); MAEDA, Yasuo, Nagoya-shi, Aichi 455-8502 (JP); NABEYA, Kota, Nagoya-shi, Aichi 455-8502 (JP)
(74) Representative: Mewburn Ellis LLP
(86) International application number: PCT/JP2019/031049
(87) International publication number: WO 2020/032083

(56) References cited:
- EP-A1- 3 072 928
- WO-A1-00/78867
- WO-A1-00/78867
- WO-A1-2015/072216
- WO-A1-2017/135055
- WO-A1-2017/135055
- WO-A1-2018/047662
- JP-A- 2002 356 611
- JP-A- 2006 152 122
- JP-A- 2013 155 279
- JP-A- 2014 196 484
- JP-A- 2015 129 073

## Description

### TECHNICAL FIELD

The present invention relates to a thermoplastic polyester resin composition having excellent alkaline resistance, hydrolysis resistance, and heat shock resistance.

### BACKGROUND ART

Thermoplastic polyester resins have excellent heat resistance, moldability, chemical resistance, electrical insulation property, and the like. Therefore, the thermoplastic polyester resins are used, mainly for injection molding, in applications such as various automobile parts, electrical parts, mechanical parts, construction parts, and the like. In such applications, for example, toilet cleaning agents, bleaching agents, bathtub cleaning agents, snow melting agents, car shampoos, and the like may be frequently spilled on these thermoplastic polyester resins. Since these chemicals contain sodium hydroxide, sodium hypochlorite, sodium percarbonate, calcium chloride and the like as their components, the resin molded articles are exposed to an alkaline environment.

When a resin molded article is exposed to the alkaline environment as described above for a long time under excessive strain by screw tightening, metal press fitting, metal insert, or the like, a so-called environmental stress cracking occurs due to the influence of both the strain and the alkaline component, which is a problem since the strength of the molded article decreases and cracks occur. In addition, in response to the recently increasing demand for weight reduction and miniaturization of various molded articles, a high level of alkaline resistance is required.

Thermoplastic polyester resin compositions with improved alkaline resistance have been studied in the past. Patent Document 1 discloses a polyester resin composition containing 30 to 95 parts by weight of a polybutylene terephthalate resin (A) containing a polybutylene terephthalate/isophthalate copolymer, 1 to 30 parts by weight of a polycarbonate resin (B), and 1 to 30 parts by weight of an elastomer (C), 3 to 60 parts by weight of a fibrous reinforcing filler (D), and 0.1 to 5 parts by weight of a silicone compound (E), wherein the polyester resin composition has excellent alkaline resistance.

Patent Document 2 discloses a thermoplastic polyester resin composition containing a thermoplastic polyester resin (A), 1 to 25% by weight of an impact resistance imparting agent (B), 0.1 to 15% by weight of a silicone compound and/or a fluorine compound (C), 1 to 50% by weight of an inorganic filler (D) and 0.1 to 10% by weight of a polyfunctional compound (E) such as an epoxy compound, an isocyanate compound, and a carboxylic acid dianhydride, wherein the thermoplastic polyester resin composition has excellent alkaline resistance.

Patent Document 3 discloses a thermoplastic polyester resin containing a thermoplastic polyester resin (A), and with respect to 100 parts by mass of the thermoplastic polyester resin (A), 10 to 80 parts by mass of a polyamide resin (B), and 1 to 10 parts by mass of an elastomer (C) having a specific structure such as a core/shell elastomer, 1 to 15 parts by mass of an epoxy compound (D), 30 to 100 parts by mass of a reinforcing filler (E), and 0.1 to 3 parts by mass of a release agent (F), wherein the thermoplastic polyester resin has excellent alkaline resistance. Patent Document 4 discloses a polybutylene terephthalate resin composition. Patent Documents 5 to 7 disclose thermoplastic polyester resin compositions.

### [PRIOR ART REFERENCES]

### [PATENT DOCUMENTS]

Patent Document 1: JP2002-356611A; Patent Document 2: WO2000/078867; Patent Document 3: JP2016-056355A; Patent Document 4: WO 2018/047662 A1; Patent Document 5: EP 3072928 A1; Patent Document 6: WO 2017/135055 A1; Patent Document 7: WO 00/78867 A1

### [SUMMARY OF THE INVENTION]

### [PROBLEMS TO BE SOLVED BY THE INVENTION]

However, in the resin composition disclosed in Patent Document 1, although cracking in the welding part in an alkaline environment was improved to some extent, the alkaline resistance was insufficient. In addition, since thermoplastic polyester resins are easily deteriorated by hydrolysis, a long-term hydrolysis resistance is also required for the use as industrial materials such as machine mechanical parts, electric/electronic parts and automobile parts. However, the thermoplastic polyester resin composition described in Patent Document 1 had insufficient hydrolysis resistance.

The thermoplastic polyester resin disclosed in Patent Document 2 also had insufficient alkaline resistance.

The resin composition disclosed in Patent Document 3 had a problem of reduced electrical insulation property due to the increased dimensional change caused by water absorption of the polyamide resin. Furthermore, the resin composition specifically disclosed in Examples of Patent Document 3 had a large compounded amount of the epoxy compound and may have a reduced retention stability.

An object of the present invention is to solve the above-mentioned problems of the prior art. Furthermore, electrical/electronic equipment parts and automobile electrical parts often have metal insert molding, press-fit parts, and screw parts. Therefore, it is also required that the resin molded article does not crack due to the difference in linear expansion coefficient between the resin and the metal as the temperature changes in the environment of use, that is, heat shock resistance is required.

That is, the present invention provides a thermoplastic polyester resin composition having excellent alkaline resistance, hydrolysis resistance, heat shock resistance, and retention stability, and a molded article in which the composition is used.

### [MEANS FOR SOLVING THE PROBLEMS]

As a result of studies to solve the above-mentioned problems, the present inventors have found that the above problems are solved by blending a thermoplastic polyester resin (A), an elastomer (B), a fibrous reinforcing filler (C), and a silicone compound (D), and further blending an epoxy compound (E) having a specific amount of epoxy equivalent, and have reached the present invention. That is, the present invention has the following structures.

The present invention is a thermoplastic polyester resin composition, comprising a thermoplastic polyester resin (A), and with respect to 100 parts by weight thereof, 1 to 40 parts by weight of an elastomer (B), 15 to 100 parts by weight of a fibrous reinforcing filler (C), 0.4 to 5 parts by weight of a silicone compound (D) and 0.1 to 10 parts by weight of an epoxy compound (E) having an epoxy equivalent of 200 to 400 g/eq.

Further, the present invention is a molded article composed of the above-mentioned thermoplastic polyester resin composition.

Furthermore, the present invention is a composite molded article, comprising the above molded article and at least one member selected from an insert member and a press-fit member.

### [EFFECT OF THE INVENTION]

According to the thermoplastic polyester resin composition of the present invention, molded articles which are excellent in alkaline resistance, hydrolysis resistance, and heat shock resistance and which are extremely useful for vehicle parts (particularly automobile parts), mechanical parts, electric/electronic parts, and the like can be obtained.

### [BRIEF DESCRIPTION OF THE DRAWINGS]

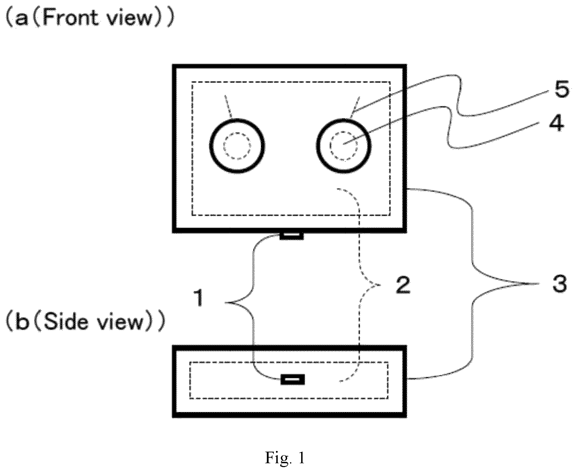

Fig. 1 is a schematic view of a cuboid-shaped iron insert used for the evaluation of heat shock resistance in Examples. Fig.1(a) shows a front view, and Fig.1(b) shows a side view.

### [MODE FOR CARRYING OUT THE INVENTION]

The present invention will be described in detail below. The thermoplastic polyester resin composition of the present invention comprises a thermoplastic polyester resin (A), and with respect to 100 parts by weight thereof, 1 to 40 parts by weight of an elastomer (B), 15 to 100 parts by weight of a fibrous reinforcing filler (C), 0.4 to 5 parts by weight of a silicone compound (D) and 0.1 to 10 parts by weight of an epoxy compound (E) having an epoxy equivalent of 200 to 400 g/eq. The thermoplastic polyester resin composition of the present invention includes a reaction product obtained by the reaction of individual components constituting the resin composition with each other. However, since the reaction product is produced by a complex reaction of polymers with each other, there exists a circumstance that the identification of the structure is not practical. Therefore, the present invention is identified by the components to be blended.

### [Thermoplastic polyester resin (A)]

The thermoplastic polyester resin (A) used in the present invention can be a polymer, a copolymer or the like obtained by a polycondensation reaction, containing a dicarboxylic acid (or an ester-forming derivative thereof) and a diol (or an ester-forming derivative thereof) as main components.

Examples of the above dicarboxylic acid include terephthalic acid, isophthalic acid, orthophthalic acid, 1,5-naphthalenedicarboxylic acid, 2,5-naphthalenedicarboxylic acid, 2,6-naphthalenedicarboxylic acid, 2,2'-biphenyldicarboxylic acid, 3,3'-biphenyldicarboxylic acid, 4,4'-biphenyldicarboxylic acid, 4,4'-diphenyletherdicarboxylic acid, 4,4'-diphenylmethanedicarboxylic acid, 4,4'-diphenylsulphondicarboxylic acid, 4,4'-diphenylisopropyridenedicarboxylic acid, 1,2-bis(phenoxy)ethane-4,4'-dicarboxylic acid, 2,5-anthracendicarboxylic acid, 2,6-anthracendicarboxylic acid, 4,4'-p-terphenylenedicarboxylic acid, 2,5-pyridinedicarboxylic acid and the like, and terephthalic acid can be preferably used.

Two or more of these dicarboxylic acids may be mixed and used. One or more of aliphatic dicarboxylic acids such as adipic acid, azelaic acid, dodecanedic acid, and sebacic acid, and alicyclic dicarboxylic acids such as cyclohexanedicarboxylic acid may be used in a small amount and mixed with these dicarboxylic acids.

Examples of the diol component include aliphatic diols such as ethylene glycol, propylene glycol, butylene glycol, hexylene glycol, neopentyl glycol, 2-methyl-1,3-propanediol, diethylene glycol, and triethylene glycol, and alicyclic diols such as 1,4-cyclohexanedimethanol, and mixtures thereof and the like. One or more of long-chain diols having a molecular weight of 400 to 6,000, that is, polyethylene glycol, poly-1,3-propylene glycol, polytetramethylene glycol, or the like may be copolymerized in a small amount.

Preferred examples of these polymers or copolymers include polyethylene terephthalate (PET), polypropylene terephthalate (PPT), polybutylene terephthalate (PBT), polyethylene naphthalate, polybutylene naphthalate (PBN), polyhexylene terephthalate (PHT), polyethylene-1,2-bis(phenoxy)ethane-4,4'-dicarboxylate, polycyclohexane-1,4-dimethylol terephthalate, and the like as well as other copolymerized polyesters such as polyethylene isophthalate/terephthalate, polybutylene terephthalate/isophthalate, polybutylene terephthalate/decandicarboxylate. Among these, polybutylene terephthalate can be preferably used. As used herein, "/" represents a copolymer.

The amount of carboxyl groups in the thermoplastic polyester resin (A) used in the present invention is not particularly limited, but is preferably 50 eq/t or less, preferably 30 eq/t or less, and more preferably 20 eq/t or less from the viewpoint of alkaline resistance and hydrolysis resistance. The lower limit of the amount of the carboxyl groups may be 0 eq/t. In the present invention, the amount of the carboxyl groups in the thermoplastic polyester resin (A) is the value determined by dissolving the thermoplastic polyester resin in an o-cresol/chloroform solvent, and then titrating the resulting solution with ethanolic potassium hydroxide.

The viscosity of the thermoplastic polyester resin (A) used in the present invention is not particularly limited as long as melt-kneading is possible, but the intrinsic viscosity as measured at 25°C using an o-chlorophenol solution is preferably in the range of 0.36 to 1.60 dl/g, and more preferably in the range of 0.50 to 1.50 dl/g from the viewpoint of moldability.

The method of producing the thermoplastic polyester resin (A) used in the present invention is not particularly limited, and can be produced by a known polycondensation method, ring-opening polymerization method, or the like. The polymerization can be either batch polymerization or continuous polymerization, and a transesterification reaction or a reaction by direct polymerization can be applied.

Further, the thermoplastic polyester resin (A) used in the present invention can be used in combination of two or more kinds.

In order to efficiently promote the esterification reaction or transesterification reaction and the polycondensation reaction, a polymerization catalyst is preferably added during these reactions. Specific examples of the polymerization catalyst include: organic titanium compounds such as methyl ester, tetra-n-propyl ester, tetra-n-butyl ester, tetraisopropyl ester, tetraisobutyl ester, tetra-tert-butyl ester, cyclohexyl ester, phenyl ester, benzyl ester, and tolyl ester of titanic acid, and mixed esters thereof; tin compounds such as dibutyltin oxide, methylphenyltin oxide, tetraethyltin, hexaethylditin oxide, cyclohexahexylditin oxide, didodecyltin oxide, triethyltin hydroxide, triphenyltin hydroxide, triisobutyltin acetate, dibutyltin diacetate, diphenyltin dilaurate, monobutyltin trichloride, dibutyltin dichloride, tributyltin chloride, dibutyltin sulfide, butylhydroxytin oxide, and alkylstannonic acids such as methylstannonic acid, ethylstannonic acid, and butylstannonic acid; zirconia compounds such as zirconium tetra-n-butoxide; and antimony compounds such as antimony trioxide and antimony acetate; and the like, and among these, organic titanium compounds and tin compounds are preferred, and furthermore, tetra-n-propyl ester, tetra-n-butyl ester and tetraisopropyl ester of titanium acid are preferred, and tetra-n-butyl ester of titanoic acid is particularly preferred. These polymerization reaction catalysts may be used alone or in combination of two or more kinds. The amount of the polymerization reaction catalyst to be added is preferably in the range of 0.005 to 0.5 parts by weight, more preferably in the range of 0.01 to 0.2 parts by weight with respect to 100 parts by weight of the thermoplastic polyester resin (A), from the viewpoint of mechanical properties, moldability and colors.

### [Elastomer (B)]

Examples of the elastomer (B) used in the present invention include olefin elastomers, butadiene elastomers, polyester elastomers, polyamide elastomers, and silicone elastomers. Among these, olefin elastomers are preferred, and ethylene copolymers obtained by copolymerizing ethylene with an alkyl ester of α, β-unsaturated carboxylic acid is preferably used from the viewpoint of alkaline resistance and heat shock resistance. The above ethylene copolymer to which unsaturated carboxylic acid glycidyl ester is further graft-polymerized results in improved elastomer dispersibility and thus is preferred from the viewpoint of heat shock resistance.

Specific examples of the ethylene copolymers include ethylene/propylene copolymers, ethylene/1-butene copolymers, ethylene/pentene copolymers, ethylene/octene copolymers, ethylene/acrylic acid copolymers, ethylene/methacrylic acid copolymers, ethylene/methyl acrylate copolymers, ethylene/methyl methacrylate copolymers, ethylene/ethyl acrylate copolymers, ethylene/ethyl methacrylate copolymers, ethylene/butyl acrylate copolymers, ethylene/butyl methacrylate copolymers, ethylene/methyl acrylate/glycidyl methacrylate copolymers, ethylene/ethyl acrylate/glycidyl methacrylate copolymers, ethylene/butyl acrylate/glycidyl methacrylate copolymers, and the like. These elastomers may be used alone or in combination of two or more kinds.

The compounded amount of the elastomer (B) is 1 to 40 parts by weight with respect to 100 parts by weight of the thermoplastic polyester resin (A) of the present invention from the viewpoint of alkaline resistance and heat shock resistance. The lower limit of the compounded amount of the elastomer (B) is preferably 5 parts by weight or more, more preferably 10 parts by weight or more. The compounded amount of less than 1 part by weight results in poor alkaline resistance and heat shock resistance of the thermoplastic polyester resin composition. The upper limit of the compounded amount of the elastomer (B) is preferably 35 parts by weight or less, more preferably 30 parts by weight or less. The compounded amount exceeding 40 parts by weight results in reduced welding strength.

### [Fibrous reinforcing filler (C)]

Examples of the fibrous reinforcing filler (C) which can be used in the present invention include glass fibers, wollastonite, potassium titanate whiskers, zinc oxide whiskers, carbon fibers, alumina fibers, metal fibers, and organic fibers (nylon, polyesters, aramid, polyphenylene sulfide, liquid crystal polymers, fibers made of resin such as acrylic) and the like. By using the fibrous reinforcing filler (C), the mechanical properties and the heat shock resistance can be further improved. It is possible to use one kind or two or more kinds of fibrous reinforcing fillers in combination, and glass fibers or wollastonite is preferably blended.

In order to improve the adhesion at the interface between the thermoplastic polyester resin (A) and the fibrous reinforcing filler (C) of the present invention, the surface of the fibrous reinforcing filler (C) is preferably treated with a surface treatment agent such as a sizing agent. The glass fibers treated with, as the surface treatment agent, a silane coupling agent such as an aminosilane compound or an epoxysilane compound, or a sizing agent containing urethane, a copolymer composed of acrylic acid such as an acrylic acid/styrene copolymer, a copolymer composed of maleic anhydride such as a methyl acrylate/methyl methacrylate/maleic anhydride copolymer, vinyl acetate, one kind or more of an epoxy compound such as a bisphenol type epoxy compound or a novolac type epoxy compound, are preferably used. As the surface treatment agent, a fibrous reinforcing filler which is surface-treated with a bisphenol type epoxy compound and/or a novolac type epoxy compound is preferred from the viewpoint of alkaline resistance, hydrolysis resistance, heat shock resistance and mechanical properties.

The fibrous reinforcing filler preferably has a fiber diameter of from 1 to 30 µm in general. From the viewpoint of the dispersibility of the glass fibers in the resin, the lower limit of the fiber diameter is preferably 5 µm. From the viewpoint of mechanical properties, the upper limit of the fiber diameter is preferably 15 µm.

The compounded amount of the fibrous reinforcing filler (C) is 15 to 100 parts by weight with respect to 100 parts by weight of the thermoplastic polyester resin (A) of the present invention from the viewpoint of mechanical properties and heat shock resistance. The lower limit of the compounded amount of the fibrous reinforcing filler (C) is preferably 20 parts by weight or more, more preferably 30 parts by weight or more. The compounded amount of less than 15 parts by weight results in poor mechanical properties and heat shock resistance of the thermoplastic polyester resin composition. The upper limit of the compounded amount of the fibrous reinforcing filler (C) is preferably 80 parts by weight or more, and still more preferably 90 parts by weight or more. The compounded amount exceeding 100 parts by weight is not preferred because the moldability decreases.

A non-fibrous filler can be used in combination in order to improve the dimensional stability of the molded article, for example. Examples of such non-fibrous fillers include silicates such as zeolite, sericite, kaolin, mica, clay, bentonite, asbestos, talc, and alumina silicate, alumina, silicon oxide, metal compounds such as magnesium oxide, zirconium oxide, titanium oxide, and iron oxide, carbonates such as calcium carbonate, magnesium carbonate, and dolomite, sulfates such as calcium sulfate and barium sulfate, glass flakes, glass beads, ceramic beads, mica, boron nitride, silicon carbide and silica.

### [Silicone compound (D)]

The silicone compound (D) used in the present invention is polyorganosiloxane having at least one of chemically bonded siloxane structural units represented by the following general formulas (1) to (4) (wherein R is independently a group selected from saturated or unsaturated monovalent hydrocarbon, a hydrogen atom, hydroxyl group, alkoxyl group, aryl group, vinyl group and allyl group). Among the silicone compounds, dimethyl silicone oil is preferred, and dimethyl silicone having a viscosity of 100 to 10,000 mm²/s as measured at 25°C according to JIS Z8803 is preferred from the viewpoint of alkaline resistance. When the viscosity is 100 mm²/s or more, the decrease in welding strength due to gas is suppressed, and a molded article having a good appearance can be obtained. The viscosity of 10,000 mm²/s or less results in improved dispersibility in the resin and improved alkaline resistance. Among all, from the viewpoint of alkaline resistance, the upper limit of viscosity is preferably 1,000 mm²/s or less.

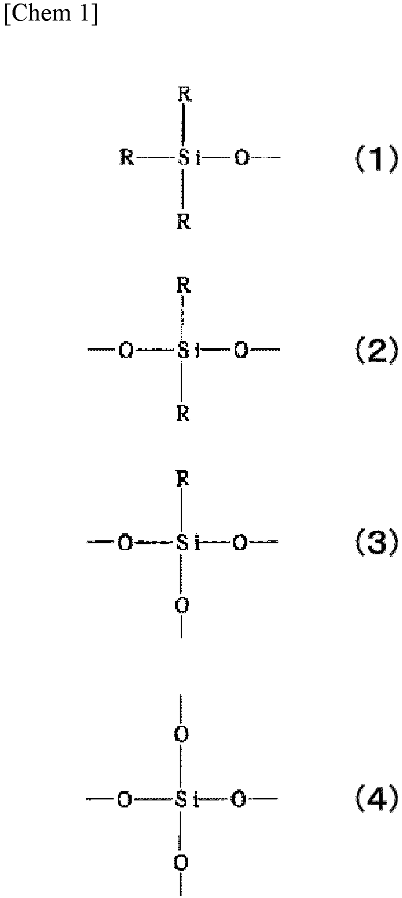

In order to prevent contact failure when the thermoplastic polyester resin composition of the present invention is applied to electronic parts, this dimethyl silicone oil is preferably a dimethyl silicone oil containing 5000 ppm or less of low molecular weight siloxane having a molecular weight of 800 or less. Dimethyl silicone oils that satisfy the above conditions are commercially available. Examples thereof include SH200 series and SH200CV series manufactured by Dow Toray Co., Ltd.

The compounded amount of the silicone compound (D) is 0.4 to 5 parts by weight with respect to 100 parts by weight of the thermoplastic polyester resin (A) of the present invention from the viewpoint of alkaline resistance and mechanical properties.
The compounded amount of the silicone compound (D) is more preferably 0.8 parts by weight or more, and still more preferably, 1.2 parts by weight or more. The compounded amount of less than 0.4 parts by weight results in poor alkaline resistance of the thermoplastic polyester resin composition. The upper limit of the compounded amount of the silicone compound (D) is preferably 4 parts by weight or less, and still more preferably 3 parts by weight or less. The compounded amount exceeding 5 parts by weight results in reduced mechanical properties such as welding strength.

### [Epoxy compound (E)]

The epoxy compound (E) used in the present invention is any compound that has one or more epoxy groups in one molecule. Usually, a glycidyl compound, which is a reaction product of an alcohol, a phenol, a carboxylic acid, or the like with epichlorohydrin, or a compound in which an olefinic double bond is epoxidized may be used.

The epoxy compound (E) used in the present invention has an epoxy equivalent of 200 to 400 g/eq. By blending an epoxy compound having an epoxy equivalent in the above range, alkaline resistance and hydrolysis resistance are dramatically improved. When the epoxy equivalent is less than 200 g/eq, the alkaline resistance and hydrolysis resistance decrease. When the epoxy equivalent exceeds 400 g/eq, the alkaline resistance and hydrolysis resistance decrease. The epoxy equivalent is more preferably 220 to 350 g/eq.

Preferred examples of the epoxy compound (E) include bisphenol type epoxy compounds or novolac type epoxy compounds which are obtained from the reaction of bisphenol and novolac with epichlorohydrin. Among these, the novolac type epoxy compound represented by the following general formula (5) is preferred from the viewpoint of alkaline resistance and hydrolysis resistance.

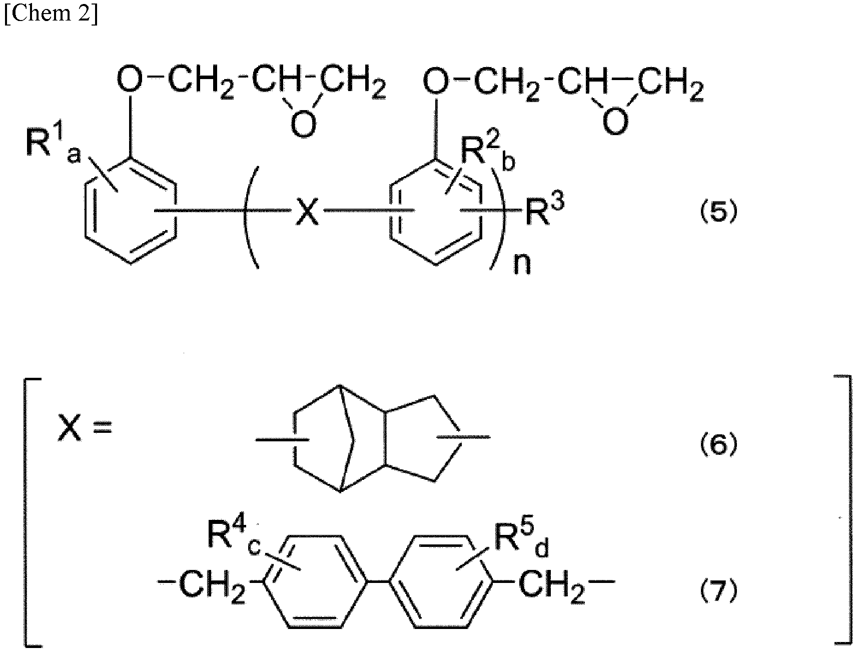

In the general formula (5), X represents a divalent group represented by the general formula (6) or (7). In the above general formulas (5) and (7), R¹, R², R⁴ and R⁵ independently represent a Ci-Cs alkyl group or a C₆-C₁₀ aryl group, and may be the same or different from each other. R³ represents a hydrogen atom, a Ci-Cs alkyl group or a C₆-C₁₀ aryl group. In the above general formula (5), n is a value greater than 0 and 10 or less. In the general formulas (5) and (7), a, c, and d independently represent an integer of 0 to 4, and b represents an integer of 0 to 3.

In order to improve further alkaline resistance and hydrolysis resistance, X in the general formula (5) is preferably a divalent group represented by the general formula (6).

Examples of Ci-Cs alkyl groups include methyl groups, ethyl groups, n-propyl groups, isopropyl groups, n-butyl groups, sec-butyl groups, tert-butyl groups and the like. Among these, a methyl group is preferred from the viewpoint of reactivity. Examples of C₆-C₁₀ aryl groups include phenyl groups, methylphenyl groups, dimethylphenyl groups, and naphthyl groups. Among these, phenyl groups are preferred from the viewpoint of reactivity. a, b, c, and d are preferably 0 to 1 from the viewpoint of reactivity.

The n in the general formula (5) represents a range greater than 0 and 10 or less. A small number of repeating units n is not desired because the epoxy compounds are melted, leading to a blocking phenomenon, and cannot be supplied to an extruder. When the number of repeating units n is large, the reaction between the epoxy compounds proceed easily and a cross-linked structure is likely to be formed, and the retention stability of the thermoplastic polyester resin composition decreases. From the viewpoint of blocking property and retention stability, the number of repeating units n is preferably 1 to 4, more preferably 1 to 3.

The compounded amount of the epoxy compound (E) is from 0.1 to 10 parts by weight with respect to 100 parts by weight of the thermoplastic polyester resin (A) of the present invention. In particular, from the viewpoint of the balance between alkaline resistance, hydrolysis resistance and moldability, the lower limit is preferably 0.3 parts by weight or more, and more preferably 0.6 parts by weight or more. The compounded amount of less than 0.1 parts by weight results in poor alkaline resistance and hydrolysis resistance. The upper limit of the compounded amount of the epoxy compound (E) is more preferably 8 parts by weight or less, and still more preferably 6 parts by weight or less. When the compounded amount exceeds 10 parts by weight, the large amount of epoxy groups results in the increased viscosity of the resin composition, and the moldability may decrease.

In the present invention, in order to impart alkaline resistance, which could not be achieved with conventional techniques, it is important to blend the epoxy compound (E) having an epoxy equivalent in a specific range and, by the resulting reaction, to reduce the amount of the carboxyl groups which are originally present in the thermoplastic polyester resin (A).

In view of this, the concentration of the carboxyl groups in the thermoplastic polyester resin composition after melt-kneading is preferably as low as possible, preferably 16 eq/t or less, more preferably 15 eq/t or less. In the most preferred aspect, the concentration of the carboxyl groups is 0 eq/t. When the concentration of carboxyl groups exceeds 16 eq/t, the alkaline resistance tends to decrease.

The concentration of carboxyl groups in the thermoplastic polyester resin composition is the value determined by dissolving the thermoplastic polyester resin composition in an o-cresol/chloroform solvent, and then titrating the resulting solution with ethanolic potassium hydroxide.

The reduction of the concentration of carboxyl groups in the thermoplastic polyester resin composition after the melt-kneading as described above can be also achieved by blending a large amount of an epoxy compound having an epoxy equivalent of more than 400 g/eq, but this method leads to reduced retention stability. On the other hand, the epoxy compound represented by the general formula (5) can, due to its specific structure, reduce the concentration of carboxyl groups in the thermoplastic polyester resin composition after melt-kneading and also maintain the retention stability.

### [Other components]

The thermoplastic polyester resin composition of the present invention can include common additives such as other resin components, inorganic fillers, release agents, antioxidants, stabilizers, nucleating agents, colorants, lubricants, and the like, to the extent that the effect of the present invention is not impaired. Two kinds or more of these can be blended.

The other resin component may be any melt-moldable resin, and examples thereof include AS resins (acrylonitrile/styrene copolymers), hydrogenated or unhydrogenated SBS resins (styrene/butadiene/styrene triblock copolymers), hydrogenated or unhydrogenated SIS resins (styrene/isoprene/styrene triblock copolymers), polycarbonate resins, polyethylene resins, polypropylene resins, polymethylpentene resins, cyclic olefin resins, cellulose resins such as cellulose acetate, polyethylene terephthalate resins, polytrimethylene terephthalate resins, polyamide resins, polyacetal resins, polysulfone resins, polyphenylene sulfide resins, polyether ether ketone resins, polyimide resins, polyetherimide resins and the like. When a crystalline resin other than the component (A) is blended, the preferred compounded amount of the crystalline resin is, with respect to 100 parts by weight of the thermoplastic polyester resin (A), 0 parts by weight or more and 9 parts by weight or less from the viewpoint of maintaining the function of the thermoplastic polyester resin (A).

As the organic filler, any plate-like, powdery or granular filler can be used. Specific examples thereof include fibrous or whisker-like fillers such as mineral wool, potassium titanate whiskers, barium titanate whiskers, aluminum borate whiskers, silicon nitride whiskers; powdery, granular or plate-like fillers such as mica, talc, kaolin, silica, calcium carbonate, glass beads, glass flakes, glass microballoons, clay, molybdenum disulfide, wollastonite, montmorillonite, titanium oxide, zinc oxide, calcium polyphosphate, graphite and barium sulfate. Two kinds or more of these can be blended.

As the release agent, any release agent used as a release agent of a thermoplastic polyester resin composition can be used. Example thereof include mineral wax such as montan wax, metal soaps such as lithium stearate and aluminum stearate, higher fatty acid amide such as ethylene bisstearylamide, polycondensates of ethylenediamine/stearic acid/sebacic acid, and petroleum wax such as paraffin wax and polyethylene wax, and the like. Two kinds or more of these can be blended.

Examples of antioxidants include phenolic compounds such as 2,6-di-t-butyl-4-methylphenol, tetrakis(methylene-3-(3,5-di-t-butyl-4-hydroxyphenyl)propionate)methane, and tris(3,5-di-t-butyl-4-hydroxybenzyl)isocyanurate, sulfur compounds such as dilauryl-3,3'-thiodipropionate and dimyristyl-3,3'-thiodipropionate, phosphorus compounds such as bis(2,6-di-t-butyl-4-methylphenyl)pentaerythritol diphosphite, trisnonylphenyl phosphite, and distearyl pentaerythritol diphosphite.

Examples of stabilizers include benzotriazole compounds such as 2-(2'-hydroxy-5'-methylphenyl)benzotriazole, and benzophenone compounds such as 2,4-dihydroxybenzophenone, esters of phosphoric acid such as mono- or distearyl phosphate, and trimethyl phosphate, and the like.

Examples of nucleating agents include polyetheretherketone resins, talc, and the like.

In addition, examples of colorants include organic dyes, organic pigments, and inorganic pigments. Two kinds or more of these can be blended.

These various additives can be used in combination of two or more kinds since synergistic effects may be obtained.

The additives exemplified as antioxidants may act as a stabilizer or an ultraviolet absorber. In addition, some of the stabilizers shown as examples have an antioxidant effect and an ultraviolet absorbing effect. That is, the above classification is for convenience and does not limit the action.

As a method of producing the thermoplastic polyester resin composition of the present invention, for example, each component is melt-kneaded using a known melt kneader such as a single screw or twin screw extruder, a Banbury mixer, a kneader or a mixing roll. Each component may be mixed together in advance and then melt-kneaded. For each component, a smaller water content is better, and each component is desirably dried in advance if necessary.

Examples of methods of introducing each component into a melt kneader may include a method in which, using a single screw or twin screw extruder, the above components (A), (B), (D) and (E) are supplied from a main feeding inlet installed on the screw root side while the component (C) is supplied from a secondary feeding inlet installed between the main feeding inlet and the tip of the extruder, and the resulting mixture is melt and mixed.

The melt-kneading temperature is preferably 200°C or higher, more preferably 220°C or higher, and even more preferably 240°C or higher from the viewpoint of excellent flowability and mechanical properties. Further, the temperature is preferably 360°C or lower, more preferably 320°C or lower, and still more preferably 280°C or lower. The melt-kneading temperature herein refers to the set temperature of the melt kneader, and for example, in the case of a twin screw extruder, the melt-kneading temperature refers to the temperature of the cylinder.

The thermoplastic polyester resin composition of the present invention can be molded by an arbitrary known method such as injection molding, extrusion molding, blow molding, press molding, and spinning, and thus can be processed and used in various molded parts. The temperature during injection molding is preferably 240°C or higher in order to further improve flowability, and preferably 280°C or lower in order to improve mechanical properties.

In particular, the thermoplastic polyester resin composition of the present invention is suitable for a molded article which has at least one selected from a metal insert part, a press-fit part, a screw part, and a welding part and which is used in the application that involves the contact with water, alkaline, or the like under stress. Typical examples of a hard member to be press-fitted include a metal member and a thermosetting resin member. The insert molded article of the present invention is a composite molded article which is obtained by mounting a metal or the like in a molding die and then filling the above-mentioned compounded resin composition around the metal or the like. Examples of molding methods for filling the resin into a mold include an injection molding method, an extrusion compression molding method, and the like, and the injection molding method is commonly used. The material to be inserted into the resin is used for the purpose of taking advantage of its properties and compensating for the defects of the resin. Therefore, a material to be used does not change its shape or does not melt in contact with the resin during molding. For this reason, mainly, metals such as aluminum, magnesium, copper, iron, brass and alloys thereof, and inorganic solids such as glass and ceramics are pre-molded into rods, pins, screws and the like, which are then used.

In the present invention, the various molded articles as described above can be used for various applications such as automobile members, electric and electronic members, building members, various containers, daily necessities, household goods, sanitary goods and the like. In particular, since the thermoplastic polyester resin composition of the present invention can result in a molded article having excellent alkaline resistance, hydrolysis resistance, and heat shock resistance, the thermoplastic polyester resin composition of the present invention is suitable for molded articles of parts around the engine such as connectors and ignition coil parts, various control units and various sensor parts in the automobile field, and is suitable for molded articles of connectors, switch parts, relay parts, and coil parts in the electrical and electronic field.

### EXAMPLES

The present invention is explained below further in detail by way of Examples, but the present invention is not limited to these Examples. Raw materials used in each Example and Comparative Example are shown below.

### Thermoplastic polyester resin (A)

A-1: Polybutylene terephthalate (carboxyl group amount: 24 eq/t, intrinsic viscosity: 0.85 dl/g)
A-2: Polybutylene terephthalate (carboxyl group amount: 15 eq/t, intrinsic viscosity: 0.74 dl/g)

### Elastomer (B)

B-1: Ethylene/methyl acrylate/glycidyl methacrylate copolymer (E/MA(27)/GMA(6))
   The weight ratio of each component is ethylene/methyl acrylate/glycidyl methacrylate = 67/27/6 wt%. MFR = 7 g/10 min (measurement method: JIS-K6760 (190°C, 2160 gf), epoxy equivalent: 2370 g/eq.
B-2: Ethylene/ethyl acrylate copolymer (E/EA(34))
   The weight ratio of each component is ethylene/ethyl acrylate = 66/34 wt%. MFR = 25 g/10 min (measurement method: JIS-K6760 (190°C, 2160 gf).
B-3: Ethylene/ ethyl acrylate copolymer (E/EA(15))
   The weight ratio of each component is ethylene/ethyl acrylate = 85/15 wt%. MFR = 6 g/10 min (measurement method: JIS-K6760 (190°C, 2160 gf).
B-4: Ethylene/ butyl acrylate copolymer (E/BA(35))
   The weight ratio of each component is ethylene/butyl acrylate = 65/35 wt%. MFR = 40 g/10 min (measurement method: JIS-K6760 (190°C, 2160 gf).

### Fibrous reinforcing filler (C)

C-1: Glass fibers (chopped strands with an average fiber diameter of 10 µm), surface treatment agent: bisphenol type epoxy compound
C-2: Glass fibers (chopped strands with an average fiber diameter of 10 µm), surface treatment agent: bisphenol type epoxy compound and novolac type epoxy compound
C-3: Glass fibers (chopped strands with an average fiber diameter of 13 µm), surface treatment agent: bisphenol type epoxy compound

### Silicone compound (D)

D-1: Silicone oil
(Viscosity: 300 mm²/s, content of a component having a molecular weight of 800 or less: 250 ppm)

### Epoxy compound (E)

E-1: Dicyclopentadiene novolac type epoxy compound having an epoxy equivalent of 276 g/eq, represented by the general formula (5): "HP-7200H" manufactured by DIC Corporation was used.
E-2: Dicyclopentadiene novolac type epoxy compound having an epoxy equivalent of 252 g/eq, represented by the general formula (5): "XD-1000" manufactured by Nippon Kayaku Co., Ltd. was used.
E'-3: Bisphenol type epoxy compound having an epoxy equivalent of 920 g/eq, represented by the following general formula (8): "jER1004K" manufactured by Mitsubishi Chemical Corp. was used.

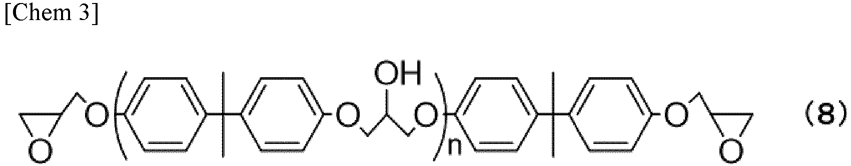

In the above general formula (8), n is a value from 3 to 6.

E'-4: Bisphenol type epoxy compound having an epoxy equivalent of 185 g/eq: "EP-17" manufactured by ADEKA Corp. was used.

### Phosphorus stabilizer (F)

(F-1) Bis(2,6-di-t-butyl-4-methylphenyl)pentaerythritol diphosphite: "Adekastab" (registered trademark) PEP36 manufactured by ADEKA Corp.

### [Methods of measuring properties]

In each Example and Comparative Example, the properties were evaluated according to the following measurement methods. In the process of obtaining a molded article by an injection molding machine, pellets of the obtained thermoplastic polyester resin composition were dried in a hot air dryer at 130°C for 3 hours or more before molding.

### (1) Alkaline resistance

Using the resin composition obtained in each Example and Comparative Example and a SE50D type injection molding machine manufactured by Sumitomo Heavy Industries, Ltd., a square plate of a film gate having a length of 80 mm, a width of 80 mm, and a thickness of 1 mm was molded at a cylinder temperature of 260°C and a mold temperature of 80°C. This square plate molded article was annealed at 160°C for 3 hours in a hot air dryer. Then this molded article was cut into a strip test piece having a width of 10 mm and a length of 80 mm and having a welding part in the central portion in the length direction. This strip test piece was fixed to an SUS semi-cylindrical shaped jig in a way the strip test piece would be bent in the longitudinal direction, and thus a bending strain of 1.5% was constantly applied to the welding part. In this state, the jig was immersed in an aqueous solution of 10 wt% sodium hydroxide for 20 hours at room temperature. After the immersion, the jig was pulled out from the aqueous solution of sodium hydroxide, washed thoroughly with water, and dried for 2 days. The strip test piece thus obtained was subjected to a tensile test at a distance between chucks of 50 mm and a tensile speed of 10 mm/min, and the tensile strength was measured. The tensile strength of the strip test piece before the immersion in the aqueous solution of sodium hydroxide was also measured in the same manner, and the tensile strength retention rate was calculated by the following formula. The alkaline resistance of the welding part was thus evaluated. Tensile strength retention rate (%) = (tensile strength (after immersion in aqueous solution of sodium hydroxide) (MPa) / tensile strength (before immersion in aqueous solution of sodium hydroxide) (MPa)) × 100

With the tensile strength retention rate of 60% or more, the alkaline resistance of the molded article can be judged to be good.
A tensile strength retention rate of 80% or more was evaluated as A, 60% or more and less than 80% as B, and less than 60% as C.

### (2) Tensile property (tensile strength)

Using the resin composition obtained in each Example and Comparative Example, a test piece was molded at a cylinder temperature of 260°C and a mold temperature of 80°C in accordance with ISO527-1, 2: 2012 to measure the tensile strength.

### (3) Hydrolysis resistance

Using the resin composition obtained in each Example and Comparative Example, a test piece was molded by the same manner as described in (2), and the test piece was subjected to a hydrolysis treatment at 121°C and 100% RH for 100 hours, using HAST CHAMBER EHS-221M manufactured by TABAI ESPEC Corp. The tensile strength of the test piece after the hydrolysis treatment was also measured in the same manner as in (2), and the tensile strength retention rate was calculated from the following formula. The hydrolysis resistance was thus evaluated. Tensile strength retention rate (%) = (tensile strength (after hydrolysis treatment) (MPa) / tensile strength (before hydrolysis treatment) (MPa)) × 100

With the tensile strength retention rate of 80% or more, the hydrolysis resistance of the molded article can be judged to be good. A tensile strength retention rate of 90% or more was evaluated as A, 80% or more and less than 90% as B, and less than 80% as C.

### (4) Heat shock resistance

As shown in Fig. 1, a cassette-shaped metal insert core 2 made of SUS, having a width of 35 mm, a length of 50 mm, a height of 5 mm, and having two holes 4 in the central portion was installed in a mold for insert molding. Then, using a SE50D type injection molding machine manufactured by Sumitomo Heavy Industries, Ltd., the thermoplastic polyester resin composition having a composition shown in each Example and Comparative Example was subjected to injection molding into the above mold through the gate 1. Thus, a metal insert molded article 3 in which the metal insert core 2 was coated with a resin having a thickness of 1.5 mm was obtained. In this molded article, the welding parts 5 are intentionally produced by providing holes 4 in the central portion under the assumption that the heat shock resistance of the welding parts 5 are evaluated. The injection conditions were as follows: a cylinder temperature of 260°C, a mold temperature of 80°C, an injection pressure of 40 MPa, an injection time of 10 seconds, and a cooling time of 10 seconds. The above insert molded article was subjected to repeated cooling and heating cycles, using a THERMAL SHOCK CHAMBER TSA-103-ES-W cold and heat shock testing machine manufactured by TABAI ESPEC Corp., in which one cycle included cooling at -40°C for 1 hour and heating at 130°C for 1 hour. The number of cycles when a crack occurred in the above insert molded article was measured. The presence or absence of cracks was confirmed once every four cycles. The number of cycles of 20 or more can be considered as good with no problem in practical use as long as cracks do not occur, but the number of cycles until the crack occurrence is preferably larger because heat shock resistance is excellent.

### (5) Welding strength

Using the resin composition obtained in each Example and Comparative Example and using a mold having gates at both ends, an ASTM No. 1 weld test piece was molded at a cylinder temperature of 260°C and a mold temperature of 80°C. A tensile test was performed at a distance between chucks of 114 mm and a tensile speed of 1 mm/min to determine the welding strength.

### (6) Retention stability

The melt viscosity index (melt flow index (MFR)) of the thermoplastic polyester resin composition was measured, using C501DOS manufactured by Toyo Seiki Seisaku-sho, Ltd., under the conditions of a temperature of 270°C and a load of 5000 gf in accordance with ASTM D1238: 1999.

After the thermoplastic polyester resin composition was retained in a cylinder for 15 minutes, the melt viscosity index was measured under the same conditions, and the ratio of difference (rate of change in %) of the melt viscosity index before and after the retention was obtained. The rate of change (%) calculated herein is an absolute value and was calculated as a positive value. When the rate of change of the melt viscosity index was 50% or more, the retention stability was judged as poor. A smaller rate of change was judged as better retention stability. A rate of change of less than 50% was evaluated as A, and a rate of change of 50% or more as B.

(7) Amount of carboxyl groups in thermoplastic polyester resin and concentration of carboxyl groups in thermoplastic polyester resin composition (concentration of carboxyl groups after melt-kneading)

The amount of carboxyl groups in the thermoplastic polyester resin and the concentration of carboxyl groups in the thermoplastic polyester resin composition (the concentration of carboxyl groups in the thermoplastic polyester resin composition after melt-kneading) was calculated by: dissolving the thermoplastic polyester resin or the thermoplastic polyester resin composition in a mixed solution of o-cresol/chloroform (211, vol/vol) to prepare a solution; and then titrating the solution with 0.05 mol/L ethanolic potassium hydroxide, using 1% bromophenol blue as an indicator.

### [Examples 1 to 20, Comparative Examples 1 to 5]

According to the compounded composition shown in Tables 1 and 2, the components (A), (B), (D), (E), and other additives were all supplied from the breech-loading part of a twin screw extruder, and the component (C) was supplied from the secondary feeding inlet installed between the main feeding inlet and the tip of the extruder, and the resulting mixture was melt-kneaded in the twin screw extruder (TEM37SS (trade name) manufactured by Toshiba Machine Co., Ltd.) with a screw diameter of 37 mm ϕ and the cylinder temperature of 250°C. The strands discharged from the die were cooled in a cooling bath and then pelletized with a strand cutter to obtain a resin composition. The evaluation results of the resulting resin compositions by the methods as described above are shown in Tables 1 and 2.

**[Table 1]**

| [Table 1] | | | | | | | | | | | | | | | |
|---|---|---|---|---|---|---|---|---|---|---|---|---|---|---|---|
| Code | Composition | Examples | | | | | | | | | | | | | |
| | | 1 | 2 | 3 | 4 | 5 | 6 | 7 | 8 | 9 | 10 | 11 | 12 | 13 | 14 |
| A-1 | Polybutylene terephthalate (carboxyl group amount: 24eq/t, intrinsic viscosity: 0.85d1/g) | 100 | 100 | 100 | 100 | 100 | 100 | 100 | | | | | | | |
| A-2 | Polybutylene terephthalate (carboxyl group amount: 15eqlt, intrinsic viscosity: 0.74dl/g) | | | | | | | | 100 | 100 | 100 | 100 | 100 | 100 | 100 |
| B-1 | E/MA(27)/GMA(6), epoxy equivalent: 2370g/eq | 5.8 | 5.8 | 5.8 | 5.8 | 3.5 | | | 3.4 | 6.0 | 3.2 | 3.4 | 3.5 | 3.4 | 3.4 |
| B-2 | E/EA(34) | 11.9 | 11.9 | | | 14.2 | 17.7 | | 13.6 | 23.9 | 8.1 | 13.7 | 13.9 | 13.4 | 13.6 |
| B-3 | E/EA(15) | | | 11.9 | | | | | | | | | | | |
| B-4 | E/BA(35) | | | | 11.9 | | | 17.7 | | | | | | | |
| C-1 | Glass fibers (10µmϕ, surface treatment agent: bisphenol type epoxy compound) | 53.1 | 53.1 | 53.1 | 53.1 | 53.1 | 53.1 | 53.1 | | | | | | | |
| C-2 | Glass fibers (10µmϕ, surface treatment agent: bisphenol type epoxy compound+ novolac type epoxy compound) | | | | | | | | | | | | | | |
| C-3 | Glass fibers (13µmϕ, surface treatment agent: bisphenol type epoxy compound) | | | | | | | | 50.8 | 56.5 | 48.4 | 51.5 | 52.0 | 50.4 | 50.8 |
| D-1 | Silicone oil | 1.8 | 1.8 | 1.8 | 1.8 | 1.8 | 1.8 | 1.8 | 1.7 | 1.9 | 1.6 | 3.0 | 4.0 | 0.8 | 1.7 |
| E-1 | Novolac type epoxy, epoxy equivalent: 276g/eq | 1.4 | | 1.4 | 1.4 | 1.4 | 1.4 | 1.4 | 1.4 | 1.5 | 1.3 | 1.4 | 1.4 | 1.3 | 5.1 |
| E-2 | Novolac type epoxy, epoxy equivalent: 252g/eq | | 1.4 | | | | | | | | | | | | |
| F | Phosphorus stabilizer | | | | | | | | | | | | | | |
| Carboxyl group concentration after melt-kneading (eq/t) | | 14.8 | 14.7 | 14.8 | 14.5 | 14.4 | 15.1 | 15.0 | 11.8 | 10.6 | 12.7 | 12.0 | 12.2 | 12.0 | 4.4 |
| Alkaline resistance (Tensile strength retention rate (%)) | | 75 | 76 | 68 | 69 | 76 | 96 | 97 | 93 | 99 | 77 | 95 | 98 | 62 | 63 |
| Alkaline resistance (Evaluation) | | B | B | B | B | B | A | A | A | A | B | A | A | B | B |
| Tensile strength (MPa) | | 106 | 106 | 107 | 105 | 106 | 106 | 105 | 108 | 89 | 98 | 105 | 102 | 111 | 107 |
| Hydrolysis resistance (Tensile strength retention rate (%)) | | 88 | 88 | 83 | 87 | 88 | 82 | 82 | 87 | 88 | 84 | 85 | 83 | 88 | 84 |
| Hydrolysis resistance (Evaluation) | | B | B | B | B | B | B | B | B | B | B | B | B | B | B |
| Heat shock resistance (cycles) | | 32 | 32 | 32 | 36 | 32 | 28 | 24 | 25 | 32 | 22 | 25 | 25 | 28 | 22 |
| Welding strength (MPa) | | 34 | 34 | 34 | 34 | 33 | 33 | 33 | 34 | 27 | 38 | 34 | 30 | 36 | 38 |
| Retention stability (Evaluation) | | A | A | A | A | A | A | A | A | A | A | A | A | A | A |

**[Table 2]**

| [Table 2] | | | | | | | | | | | | |
|---|---|---|---|---|---|---|---|---|---|---|---|---|
| Code | Composition | Examples | | | | | | Comparative Examples | | | | |
| | | 15 | 16 | 17 | 18 | 19 | 20 | 1 | 2 | 3 | 4 | 5 |
| A-1 | Polybutylene terephthalate (carboxyl group amount: 24eq/t, intrinsic viscosity: 0.85d1/g) | 100 | 100 | 100 | 100 | 100 | 100 | 100 | 100 | 100 | 100 | |
| A-2 | Polybutylene terephthalate (carboxyl group amount: 15eq/t, intrinsic viscosity: 0.74d1/g) | | | | | | | | | | | 100 |
| B-1 | E/MA(27)/GMA(6), epoxy equivalent: 2370g/eq | 5.8 | 5.8 | 5.8 | 5.8 | 5.8 | 5.8 | 5.8 | 5.8 | 15.4 | 5.8 | 3.4 |
| B-2 | E/EA(34) | 11.9 | 11.9 | 11.9 | 11.9 | 11.9 | 11.9 | 11.9 | 11.9 | 30.8 | 11.9 | 13.6 |
| B-3 | E/EA(15) | | | | | | | | | | | |
| B-4 | E/BA(35) | | | | | | | | | | | |
| C-1 | Glass fibers (10µmϕ, surface treatment agent: bisphenol type epoxy compound) | 53.1 | | | 53.1 | 53.1 | 53.1 | 53.1 | | 65.9 | 53.1 | |
| C-2 | Glass fibers (10µmϕ, surface treatment agent: bisphenol type epoxy compound+ novolac type epoxy compound) | | 53.1 | | | | | | 53.1 | | | |
| C-3 | Glass fibers (13µmϕ, surface treatment agent: bisphenol type epoxy compound) | | | 53.1 | | | | | | | | 50.8 |
| D-1 | Silicone oil | 1.8 | 1.8 | 1.8 | 1.8 | 1.8 | 1.8 | 1.8 | 1.8 | 2.2 | 1.8 | 1.7 |
| E-1 | Novolac type epoxy, epoxy equivalent: 276g/eq | 2.7 | 1.4 | 1.4 | 1.4 | 0.7 | 1.4 | | | | | |
| E-2 | Novolac type epoxy, epoxy equivalent: 252g/eq | | | | | | | | | | | |
| E'-3 | Bisphenol type epoxy, epoxy equivalent: 920g/eq | | | | 1.4 | | | | | | 1.4 | |
| E'-4 | Bisphenol type epoxy, epoxy equivalent: 185g/eq | | | | | | | | | | | 1.4 |
| F | Phosphorus stabilizer | | | | | | 0.2 | | | | | |
| Carboxyl group concentration after melt-kneading (eq/t) | | 4.6 | 14.5 | 14.4 | 4.9 | 16.4 | 13.7 | 17.8 | 17.3 | 17.6 | 16.5 | 16.4 |
| Alkaline resistance (Tensile strength retention rate (%)) | | 76 | 76 | 74 | 88 | 68 | 75 | 3 | 16 | 78 | 50 | 0 |
| Alkaline resistance (Evaluation) | | B | B | B | A | B | B | C | C | B | C | C |
| Tensile strength (MPa) | | 108 | 106 | 102 | 107 | 104 | 106 | 102 | 102 | 94 | 105 | 105 |
| Hydrolysis resistance (Tensile strength retention rate (%)) | 91 | 91 | 87 | 90 | 79 | 80 | 63 | 67 | 69 | 73 | 77 | |
| Hydrolysis resistance (Evaluation) | A | A | B | A | B | B | C | C | C | C | C | |
| Heat shock resistance (cycles) | 32 | 32 | 32 | 32 | 32 | 32 | 32 | 32 | 28 | 32 | 25 | |
| Welding strength (MPa) | 34 | 34 | 34 | 34 | 34 | 34 | 33 | 33 | 23 | 34 | 34 | |
| Retention stability (Evaluation) | A | A | A | A | A | A | A | A | A | A | A | |

What the results in Tables 1 and 2 show is as follows.

From the comparison of Examples 1 to 20 and Comparative Examples 1 to 5, it was found that a thermoplastic polyester resin composition, comprising a thermoplastic polyester resin (A), and with respect to 100 parts by weight thereof, 1 to 40 parts by weight of an elastomer (B), 15 to 100 parts by weight of a fibrous reinforcing filler (C), 0.4 to 5 parts by weight of a silicone compound (D) and 0.1 to 10 parts by weight of an epoxy compound (E) having an epoxy equivalent of 200 to 400 g/eq, was excellent in alkaline resistance, hydrolysis resistance, heat shock resistance, and welding strength.

### DESCRIPTION OF THE REFERENCE NUMERALS

1. Gate
2. Metal insert core
3. Metal insert molded article
4. Hole
5. Welding part of molded article

## Claims

1. A thermoplastic polyester resin composition, comprising a thermoplastic polyester resin (A), and with respect to 100 parts by weight thereof, 1 to 40 parts by weight of an elastomer (B), 15 to 100 parts by weight of a fibrous reinforcing filler (C), 0.4 to 5 parts by weight of a silicone compound (D) and 0.1 to 10 parts by weight of an epoxy compound (E) having an epoxy equivalent of 200 to 400 g/eq.

2. The thermoplastic polyester resin composition according to claim 1, wherein said epoxy compound (E) is a novolac type epoxy compound.

3. The thermoplastic polyester resin composition according to claim 1 or 2, wherein said elastomer (B) is an ethylene copolymer obtained by copolymerizing ethylene with an alkyl ester of α, β-unsaturated carboxylic acid.

4. The thermoplastic polyester resin composition according to any one of claims 1 to 3, wherein the concentration of carboxyl groups in said thermoplastic polyester resin composition is 0 to 16 eq/t.

5. The thermoplastic polyester resin composition according to any one of claims 1 to 4, wherein said fibrous reinforcing filler (C) is glass fibers or wollastonite.

6. A molded article obtained by molding the thermoplastic polyester resin composition according to any one of claims 1 to 5.

7. The molded article according to claim 6, comprising at least one selected from a welding part and a screw part.

8. A composite molded article, comprising the molded article according to claim 6 or 7 and at least one member selected from an insert member and a press-fit member.

## Patentansprüche

1. Thermoplastische Polyesterharz-Zusammensetzung, die ein thermoplastisches Polyesterharz (A) und, bezogen auf 100 Gewichtsteile davon, 1 bis 40 Gewichtsteile eines Elastomers (B), 15 bis 100 Gewichtsteile eines faserförmigen Verstärkungsfüllstoffs (C), 0,4 bis 5 Gewichtsteile einer Silikonverbindung (D) und 0,1 bis 10 Gewichtsteile einer Epoxyverbindung (E) mit einem Epoxyäquivalent von 200 bis 400 g/Äqu. umfasst.

2. Thermoplastische Polyesterharz-Zusammensetzung nach Anspruch 1, wobei die Epoxyverbindung (E) eine Epoxyverbindung vom Novolaktyp ist.

3. Thermoplastische Polyesterharz-Zusammensetzung nach Anspruch 1 oder 2, wobei das Elastomer (B) ein Ethylen-Copolymer ist, das durch Copolymerisieren von Ethylen mit einem Alkylester einer α,β-ungesättigten Carbonsäure erhältlich ist.

4. Thermoplastische Polyesterharz-Zusammensetzung nach einem der Ansprüche 1 bis 3, wobei die Konzentration der Carboxylgruppen in der thermoplastischen Polyesterharz-Zusammensetzung 0 bis 16 Äqu./t beträgt.

5. Thermoplastische Polyesterharz-Zusammensetzung nach einem der Ansprüche 1 bis 4, wobei der faserförmige Verstärkungsfüllstoff (C) Glasfasern oder Wollastonit ist.

6. Formteil, das durch Formen einer thermoplastischen Polyesterharz-Zusammensetzung nach einem der Ansprüche 1 bis 5 erhältlich ist.

7. Formteil nach Anspruch 6, das zumindest eines aus einem Schweißteil und einem Schraubteil ausgewähltes umfasst.

8. Verbundformteil, der ein Formteil nach Anspruch 6 oder 7 und zumindest ein aus einem Einsatzelement und einem Presspasselement ausgewähltes Element umfasst.

## Revendications

1. Composition de résine de polyester thermoplastique, comprenant une résine de polyester thermoplastique (A), et par rapport à 100 parties en poids de celle-ci, de 1 à 40 parties en poids d'un élastomère (B), de 15 à 100 parties en poids d'une charge de renforcement fibreuse (C), de 0,4 à 5 parties en poids d'un composé de silicone (D) et de 0,1 à 10 parties en poids d'un composé époxy (E) présentant un équivalent époxy de 200 à 400 g/éq.

2. Composition de résine de polyester thermoplastique selon la revendication 1, dans laquelle ledit composé époxy (E) est un composé époxy de type novolaque.

3. Composition de résine de polyester thermoplastique selon la revendication 1 ou 2, dans laquelle ledit élastomère (B) est un copolymère d'éthylène obtenu par copolymérisation d'éthylène avec un ester d'alkyle d'acide carboxylique α,β-insaturé.

4. Composition de résine de polyester thermoplastique selon l'une quelconque des revendications 1 à 3, dans laquelle la concentration de groupes carboxyle dans ladite composition de résine de polyester thermoplastique est de 0 à 16 éq/t.

5. Composition de résine de polyester thermoplastique selon l'une quelconque des revendications 1 à 4, dans laquelle ladite charge de renforcement fibreuse (C) est des fibres de verre ou de la wollastonite.

6. Article moulé obtenu par le moulage d'une composition de résine de polyester thermoplastique selon l'une quelconque des revendications 1 à 5.

7. Article moulé selon la revendication 6, comprenant au moins une sélectionnée parmi une partie de soudage et une partie de vis.

8. Article moulé composite, comprenant l'article moulé selon la revendication 6 ou 7 et au moins un élément choisi parmi un élément d'insert et un élément d'ajustement serré.
